# EUROPEAN PATENT APPLICATION

(11) **EP 3 626 437 A1**
(43) Date of publication of application: **25.03.2020**
(21) Application number: 18196045.1
(22) Date of filing: 21.09.2018
(51) Int. Cl.: B29C 64/393, B33Y 50/02, B22F 3/105

(54) **METHOD FOR CALIBRATING AN APPARATUS FOR ADDITIVELY MANUFACTURING THREEDIMENSIONAL OBJECTS**

(71) Applicant: Concept Laser GmbH, 96215 Lichtenfels (DE)
(72) Inventor: Döhler, Tim, 96269 Großheirath (DE)
(74) Representative: Hafner & Kohl Patent- und Rechtsanwälte Partnerschaft mbB

(57) **Abstract**

Method for calibrating an apparatus (1) for additively manufacturing three-dimensional objects by means of successive layerwise selective irradiation and consolidation of layers of a build material which can be consolidated by means of an energy beam (3), comprising the steps:
- providing at least one calibration source (8, 9, 10) in a calibration plane (16)
- imaging the calibration source (8, 9, 10) to an actual position (18) in a determination plane (15) comprising at least two determination regions (19 - 27), preferably with given coordinates, in particular arranged in a grid-like pattern
- moving the image (28) of the calibration source (8, 9, 10) from the actual position (18) in at least one direction (29, 32, 34, 35) across the determination plane (15) until the image (28) passes from the actual determination region (19 - 27) into another determination region (19 - 27)
- determining a distance information indicating a defined distance (30, 33, 36, 37) the image (28) is moved
- determining the actual position (18) of the image (28) based on the determined distance information.

## Description

The invention relates to a method for calibrating an apparatus for additively manufacturing three-dimensional objects by means of successive layerwise selective irradiation and consolidation of layers of a build material which can be consolidated by means of an energy beam.

Apparatuses for additively manufacturing three-dimensional objects and methods for calibrating the same are generally known from prior art. Usually, the energy beam that is used to selectively irradiate and thereby consolidate the build material has to be positioned accurately to ensure that the irradiation pattern that is generated in a build plane, i.e. a plane in which the build material is arranged to be irradiated, is properly guided, e.g. a spot of the energy beam is properly positioned. Deviations from a nominal position of the energy beam in the build plane may lead to inaccuracies and/or defects in the object.

Therefore, methods for calibrating additive manufacturing apparatuses have been suggested to ensure that the energy beam is accurately guided, in particular to the correct position in the build plane. For example, it is known to generate an irradiation pattern on a test specimen, for example irradiate a grid or line structure in a test material, and to determine whether the patern is irradiated properly or whether deviations from a nominal grid or line structure occurred during the irradiation process. Such a calibration method is cumbersome and time-consuming, as the test specimen has to be arranged in the process chamber, the process atmosphere has to be established and the irradiation process of the irradiation pattern on the test specimen has to be performed. Afterwards, the test specimen has to be removed from the process chamber and the pattern irradiated onto the test specimen has to be measured. Hence, a calibration during an additive manufacturing process is not possible.

It is an object of the present invention to provide an improved method for calibrating an apparatus for additively manufacturing three-dimensional objects, wherein in particular the effort for performing the calibration process is reduced.

The object is inventively achieved by a method according to claim 1. Advantageous embodiments of the invention are subject to the dependent claims.

The method described herein is a method for calibrating an apparatus for additively manufacturing three-dimensional objects, e.g. technical components, by means of successive selective layerwise consolidation of layers of a powdered build material ("build material") which can be consolidated by means of an energy beam, in particular a laser beam or an electron beam. A respective build material can be a metal, ceramic or polymer powder. A respective energy beam can be a laser beam or an electron beam. A respective apparatus can be an apparatus in which an application of build material and a consolidation of build material is performed separately, such as a selective laser sintering apparatus, a selective laser melting apparatus or a selective electron beam melting apparatus, for instance.

The apparatus may comprise a number of functional units which are used during its operation. Exemplary functional units are a process chamber, an irradiation device which is adapted to selectively irradiate a build material layer disposed in the process chamber with at least one energy beam, and a stream generating device which is adapted to generate a gaseous fluid stream at least partly streaming through the process chamber with given streaming properties, e.g. a given streaming profile, streaming velocity, etc. The gaseous fluid stream is capable of being charged with non-consolidated particulate build material, particularly smoke or smoke residues generated during operation of the apparatus, while streaming through the process chamber. The gaseous fluid stream is typically inert, i.e. typically a stream of an inert gas, e.g. argon, nitrogen, carbon dioxide, etc.

As described before, the inventive method relates to a calibration process for an apparatus for additively manufacturing of three-dimensional objects, wherein in particular the apparatus can be calibrated to ensure that the energy beam is properly guided across the build plane. The invention is based on the idea that at least one calibration source is provided in a calibration plane, which calibration source can be actively generated or can be adapted to emit radiation itself. For example, the calibration source can be generated by irradiating a structure in the calibration plane, for example irradiating a test specimen, build material or any other arbitrary structure that can be irradiated with the energy beam to emit radiation. It is particularly possible to heat the structure arranged in the calibration plane for generating thermal radiation and it is also possible to have a structure arranged in the calibration plane that is adapted to reflect at least one part of the energy beam and thereby emit radiation. It is also possible to have a calibration source arranged in the build plane that is adapted to actively emit radiation, such as a light source, for example a light emitting diode or the like.

The calibration source that is provided in the calibration plane, for example a build plane of the apparatus, is imaged to an actual position in a determination plane, for example a detector plane of a determination unit. The determination plane comprises at least two determination regions, preferably with given coordinates, in particular arranged in a grid-like pattern. Hence, the determination plane comprises two or more regions, wherein the position of each of the at least two determination regions is preferably known or predefined, respectively. The determination plane may for example be understood as plane in which a detection element of a determination unit is arranged, such as a CCD-chip of a camera.

Subsequently, the image of the calibration source that is imaged onto the determination plane is moved from the actual position in at least one direction across the determination plane until the image passes from the actual determination region into another determination region. As described before, the at least two determination regions may be arranged in a grid-like pattern or may be arranged adjacent, respectively. As the calibration source is imaged onto the determination plane, the image of the calibration source is initially positioned in an actual position, namely incident in one of the at least two determination regions. The image of the calibration source can then be moved from the actual position in at least one direction until the image of the calibration source passes into the adjacent determination region. The at least two determination regions may, for example in the grid-like structure, be arranged directly adjacent. It is also possible to arrange the at least two determination regions spaced a defined distance away from each other.

After the image of the calibration source passed into the other determination region (adjacent determination region) a distance information can be determined indicating a defined distance the image was moved. The defined distance describes the length of the path the image is moved from the actual position, i.e. the position in which the image is initially incident on the determination plane, and the position in which the image of the calibration source passes into the other (adjacent) determination region. For example, it is possible to determine the distance information, in particular the defined distance the image is moved, by taking a motion parameter of the beam guiding unit, e.g. indicating a movement of a scanning mirror, that is used to move the image in the at least one direction for the defined distance into calculation. Based on the distance information that has been determined, the actual position of the image in which the image was initially imaged onto the determination plane can be determined.

In other words, it is possible to establish a relation between the actual position and a nominal position in which the image should have been imaged onto the determination plane. For example, if the apparatus for additively manufacturing three-dimensional objects is properly calibrated, the image is incident on the determination plane in the nominal position. If the apparatus for additively manufacturing three-dimensional objects is not properly calibrated, a deviation between the actual position of the image and the nominal position of the image occurs. Hence, by determining the distance information and establishing the relation between the actual position and nominal position of the image in the determination plane, in particular the well-defined coordinates of the at least two determination regions, it is possible to determine whether the apparatus is properly calibrated.

According to a first embodiment of the inventive method, the image is incident on a first determination region, in particular matching a first pixel of the determination plane, wherein the image is moved for the defined distance in a first direction until the image is incident on a second determination region, in particular a second pixel, adjacent to the first pixel in moving direction. As described before, the determination plane may comprise an arbitrary number of determination regions, for example pixels of a determination plane of a determination unit, such as a camera chip, in particular a CCD-chip. By moving the image for the defined distance, the image will move from the first determination region, e.g. the first pixel, to the second determination region, e.g. the second pixel, which is arranged adjacent to the first pixel in moving direction. Hence, via the determination unit it is possible to determine exactly when the image passes from the first pixel to the second pixel, as a corresponding signal is generated via the determination unit which can determine which pixel is illuminated via the image of the calibration source.

The image may, for example, be moved continuously or stepwise via a beam guiding unit of the apparatus, wherein a minimum moving distance is below a size of the determination regions, in particular the pixel size of the pixels, in the determination plane. Hence, the calibration source that is generated in the calibration plane can be imaged via the beam guiding unit onto the determination plane, for example onto a determination element of a determination unit, such as a camera. As the image is moved across the determination plane, in particular from one determination region to the other determination region, the minimum moving distance may be below the size of the determination regions. In other words, the beam guiding unit is adapted to move the image across the determination plane with a precision that is below the size of the determination region, in particular a sub-pixel accuracy.

The inventive method may further be improved in that the determination process can be performed for at least two, preferably four, directions. Hence, it is possible to determine the exact position, in particular the actual position, in which the image is initially incident on the determination plane, by moving the image in at least two different directions, for example perpendicular directions, such as along a x- and y-axis of a coordinate system, for example arranged in parallel to the edges of the determination plane. For example, it is possible to move the image in a first direction, for example a long x-direction, until the image passes into the determination region that is adjacent to the actual determination region in x-direction. Hence, the distance information may be determined for the first direction, for example x-direction.

Subsequently, the determination process may be performed for another direction, for example in y-direction, until the image passes into the other determination region, adjacent in y-direction. Of course, the individual determination processes may be performed starting from the actual position of the image in the determination plane or it is possible to subsequently perform the determination processes, as the two directions may be chosen to be independent from each other, i.e. a movement of the image in one direction does not involve a movement in the other direction. The determination process may be performed for any arbitrary number of directions, for example in all four directions, such as "+x" - direction, "-x" - direction, "+y" - direction and "-y" - direction.

The determination process may also be performed for at least two different energy beams. For example, the apparatus may be adapted to generate at least two different energy beams that overlap in an overlapping region of the build plane / calibration plane. Hence, the calibration source, for example generated via each of the at least two energy beams, can be provided in the build plane / calibration plane, in particular in the overlapping region. Wherein the determination process can be performed for each of the at least two energy beams individually, for example subsequently, as described before. Hence it is possible to determine the positioning accuracy of each of the at least two energy beams and to ensure that the at least two energy beams are calibrated in that the at least two energy beams can be properly guided across the build plane, for example that each of the at least two energy beams can be guided to the exact same position and that no deviation occurs.

Further, a nominal position of the image of the calibration source may be compared with the actual position, wherein if a difference between the nominal position and the actual position is determined, the beam guiding unit is adjusted. For example, as described before, the actual position of the image of the calibration source can be determined, in particular the position in which the image is initially incident on the determination plane. This actual position can be compared with a nominal position, for determining whether the calibration source is imaged to the correct position on the determination plane.

Hence, the comparison between the actual position and the nominal position allows for deriving whether the apparatus for additively manufacturing three-dimensional object is calibrated. If no difference occurs, no adjustment to the apparatus is necessary. If a difference occurs, the beam guiding unit may be adjusted to ensure that the calibration source is imaged to the nominal position. As the beam guiding unit may also be used to guide the energy beam during the additive manufacturing process, the positioning accuracy of the image on the determination plane can be directly related to the positioning accuracy of the energy beam in the build plane. Hence, it is possible to adjust the beam guiding unit in that the position in which the image of the calibration source is imaged onto the determination plane matches the nominal position. Thus, it is ensured that the beam guiding unit will guide the energy beam properly across the build plane, in particular a defined positioning accuracy can be met.

Besides, the invention relates to an apparatus for additively manufacturing three-dimensional objects by means of successive layerwise selective irradiation and consolidation of layers of a build material which can be consolidated by means of an energy beam, which apparatus comprises an irradiation device that is adapted to generate and guide the energy beam across a build plane, wherein at least one calibration unit is provided that is arrangeable or arranged inside a process chamber of the apparatus, wherein the calibration unit comprises at least one calibration source, wherein the apparatus comprises a beam guiding unit that is adapted to image the calibration source to an actual position on a determination plane of a determination unit, wherein the determination plane comprises at least two determination regions, wherein the beam guiding unit is adapted to move the image of the calibration source in at least one direction across the determination plane for a defined distance, wherein a distance information indicating the defined distance is determined, wherein the defined distance depends on a changeover criterion, wherein the determination unit is adapted to determine an actual position of the image of the calibration source before the movement based on the distance information.

The inventive apparatus comprises a calibration unit that is arranged in the process chamber of the apparatus or can be arranged in the process chamber, for example as an external calibration unit and be inserted into the process chamber of the apparatus to perform the calibration process. The apparatus comprises a beam guiding unit, preferably the beam guiding unit used to guide the energy beam across the build plane in a regular mode of operation of the additive manufacturing apparatus. The beam guiding unit is further adapted to image the calibration source, which is provided via the calibration unit, for example generated in the calibration plane in which the calibration unit is arranged, to an actual position on a determination plane of the determination unit. The determination unit, as described before, may for example be built as camera providing a determination plane, on a determination element, such as a CCD-chip.

The determination plane comprises at least two, preferably multiple, determination regions, such as arranged in a grid-like pattern, such as multiple pixels of a CCD-chip. The beam guiding unit is used to move the image of the calibration source in at least one direction across the determination plane for a defined distance. The defined distance can be chosen dependent on a changeover criterion, as will be described below. Further, a distance information can be determined that indicates the defined distance for which the image is moved across the determination plane. Based on the distance information, the determination unit is adapted to determine an actual position of the image of the calibration source in which the image of the calibration source is incident before the movement.

In other words, a calibration source can be generated or provided in the calibration plane, as described before. The calibration source, for example a spot of an energy beam, can be imaged via the beam guiding unit onto the determination plane of the determination unit on which it is incident in one of the at least two determination regions. The position in which the image is initially incident on the determination plane is called "actual position" in the scope of this application. Starting from the actual position, the image of the calibration source is moved via the beam guiding unit, for example via moving a mirror of the beam guiding unit, for a defined distance until a changeover criterion is fulfilled. Subsequently, the determination unit is adapted to determine the actual position based on the distance information. Hence, the sub-pixel accuracy of the beam guiding unit, for example a laser scanner with a deflectable mirror element, can be used to determine the actual position of the image on the determination plane more accurately than only using the position of the illuminated determination region, i.e. the pixel of the determination plane. As the pixel of the determination plane has a defined dimension which is far larger than the positioning accuracy of the beam guiding unit, it can only be derived from the signal of the determination unit which pixel is illuminated but not in which exact position within the pixel the image is incident on the determination plane. Hence, it is possible to spatially resolve two different images or images in two different positions within the same pixel.

The inventive apparatus, in particular the calibration unit of the inventive apparatus allows for determining the distance information, in particular the defined distance between the edge of the determination region and the actual position. Hence, the accuracy with which the actual position of the image of the calibration source on the determination plane is determined can be significantly enhanced below the pixel size of the determination plane.

According to an embodiment of the inventive apparatus, the changeover criterion defines a changeover in at least one illuminated determination region, in particular the image passing from the actual determination region into another determination region. As described before, the image is initially incident in the actual position on the determination plane, i.e. incident in an actual determination region. The image is moved by the beam guiding unit until the changeover criterion is fulfilled, i.e. until the image passes into another determination region, for example the (directly) adjacent determination region in moving direction. Based on the change of the illuminated determination region, for example indicated via a corresponding signal of the determination unit, the distance by which the image of the calibration source is moved by the beam guiding unit can be measured. Hence, starting from the edge between the at least two determination regions, the distance in that particular moving direction can be determined and therefore, it is possible to determine where inside the pixel the image of the calibration source was initially incident, e.g. relative to an edge of the pixel or the center of the pixel or the like.

The beam guiding unit may further comprise at least one beam guiding element, in particular a scanning mirror, wherein the beam guiding element is adapted to position the image of the calibration source on the determination plane with a defined positioning accuracy. The defined positioning accuracy of the beam guiding unit or the beam guiding element is below the size of the determination regions of the determination plane. Hence, the defined positioning accuracy is less or equal the size of the determination region, in particular the pixel size of the determination regions of the determination plane. For example, if a camera chip, such as a CCD-chip, is used as determination plane, the pixel size of the individual pixels is larger than the minimum distance by which the beam guiding unit is adapted to move the image across the determination plane.

The calibration unit preferably comprises a plurality of calibration sources that are arranged in a defined pattern or it is possible to generate a plurality of calibration sources on the calibration unit, respectively, in particular a grid-like pattern, preferably 11 times 11 calibration sources. As described before, the individual calibration sources may be adapted to emit radiation in different types of ways, for example passively by being irradiated with an energy beam and either reflecting at least one part of the energy beam which can be imaged to the determination plane or by heating up and emitting thermal radiation which can also be imaged to the determination plane. It is also possible that the calibration sources actively emit radiation, such as calibration sources being built as light sources, in particular LEDs or other light sources coupled into fibers and the like.

By providing a plurality of calibration sources, it is possible to image different calibration sources arranged in different positions inside the process chamber, in particular in the calibration plane, to the determination region and therefore, calibrate the apparatus for more than one position of the energy beam.

The calibration unit may comprise a calibration base body with at least one recess in which the at least one calibration source can be received. For example, it is possible to build the calibration base body as plate-like element that has recesses in its top surface in which the calibration source can be received. In particular, the calibration base body may be a metal plate with recesses in which the calibration sources, such as LEDs, are received.

At least one calibration source, as described before, can be built as light source, in particular as light emitting diode, or as fiber coupled with a light source or a surface element adapted to emit radiation upon irradiation with an energy beam.

Further, at least one receiving means may be arranged in the process chamber of the apparatus, which is adapted to receive the calibration unit. According to this embodiment, it is possible to arrange a receiving means in the process chamber in that the calibration unit can be positioned accurately inside the process chamber. For example, the calibration unit can be coupled with a receiving means in that the calibration unit is in a well-defined position and the at least one calibration source the calibration unit provides is also in a well-defined position, for example with respect to at least one machine axis of the apparatus.

As also described before, the calibration unit may be adapted to compare a nominal position of the image of the calibration source on the determination plane with an actual position of the calibration source in the determination plane, wherein the beam guiding unit may be adjusted dependent on a difference between the nominal position and the actual position.

Of course, all features, details and advantages described with respect to the inventive method are fully transferable to the inventive apparatus and vice versa.

Exemplary embodiments of the invention are described with reference to the Fig. The Fig. are schematic diagrams, wherein
- Fig. 1: shows an inventive apparatus; and
- Fig. 2: shows a top view on a determination plane of the inventive apparatus from Fig. 1.

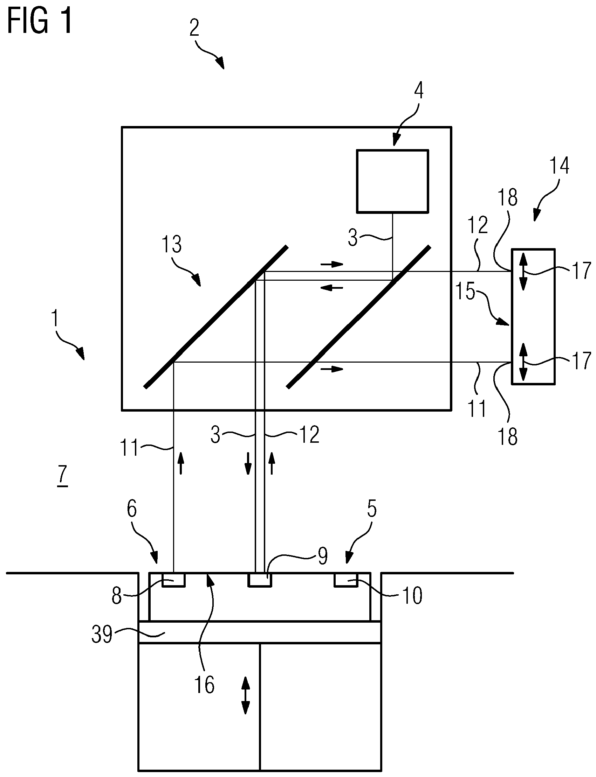

Fig. 1 shows an apparatus 1 for additively manufacturing three-dimensional objects by means of successive layerwise selective irradiation and consolidation of layers of a build material. The apparatus 1 comprises an irradiation device 2 that is adapted to generate an energy beam 3 via a beam source 4, for example a laser source adapted to generate a laser beam. The irradiation device 2 is further adapted to guide the energy beam the 3 to a build plane 5, i.e. a plane in which build material can be arranged to be irradiated in a regular mode of operation of the apparatus 1.

The apparatus 1 comprises a calibration unit 6 arranged inside a process chamber 7 of the apparatus 1. The process chamber 7 is the chamber in which the additive manufacturing process is performed during a regular mode of operation, in particular during an additive manufacturing process performed on the apparatus 1. The calibration unit 6 according to this exemplary embodiment comprises multiple calibration sources 8, 9, 10, wherein the amount of calibration sources 8, 9, 10 can be chosen arbitrarily and it is sufficient for the inventive method to provide only one calibration source 8, 9, 10, as will be described in below.

In this exemplary embodiment the calibration source 8 is built as active calibration source, for example as light source, such as a light emitting diode that is adapted to emit radiation 11. The calibration source 9, 10 are adapted to passively emit radiation 12, for example upon irradiation with the energy beam 3. The calibration source 9 can for example be a body of metal that can be heated up via the energy beam 3 and emit thermal radiation. The calibration source 10 may reflect at least one part of the energy beam 3. In other words, the calibration sources 8, 9 and 10 can either be active calibration sources that are actively adapted to emit radiation or the calibration sources can be generated via the energy beam 3. An arbitrary combination or selection of calibration sources 8, 9, 10 can be made.

Independent of the mode of generation of the calibration source 8, 9, 10 the irradiation device 2 comprises a beam guiding unit 13 that is adapted to image the calibration source 8, 9, 10 to a determination unit 14, in particular onto a determination plane 15 of the determination unit 14. The determination unit 14 is for example built as a camera comprising a CCD-chip providing the determination plane 15. In other words, the energy beam 3 may be guided onto the calibration unit 6 to generate calibration sources 9, 10, i.e. an irradiation pattern generated in a calibration plane 16, for example the top surface of the calibration unit 6, for example arranged in the build plane 5. It is also possible that the calibration unit 6 is built as calibration base body, for example a metal plate with recesses in which the calibration sources 8, for example light emitting diode, is received. The calibration source 8 may also be imaged to the determination plane 15, as described before.

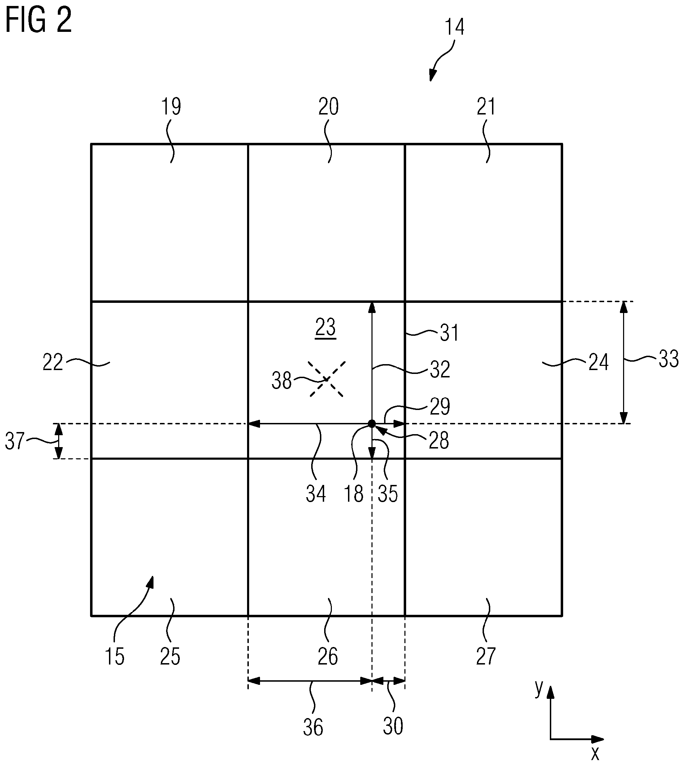

The beam guiding unit 13 is further adapted to move the images of the calibration sources 8, 9, 10 across the determination plane 15, as indicated via arrows 17. Hence, images of the calibration sources 8, 9, 10 are generated in the determination plane 15, as the calibration sources 8, 9, 10 are imaged via the beam guiding unit 13, for example comprising a beam guiding element, such as a movable mirror, to the determination plane 15. The image of the calibration sources 8, 9, 10 are incident in an initial position 18 in the determination plane 15, as can be derived from Fig. 2 which shows a top view onto the determination plane 15, for example the detection surface of the determination element of the determination unit 14, in particular a CCD-chip of a camera.

The determination plane 15 comprises multiple determination regions 19 - 27 that are arranged in a grid-like pattern, for example a pixel grid. Although, only nine pixels are depicted in the determination plane 15 according to this exemplary embodiment, it is to be understood that any arbitrary number of determination regions 19 - 27 (pixels) can be provided. As an example, an image 28 of the calibration source 9, for example a spot of the energy beam 3 in the calibration plane 16, is imaged to the determination region 23, for example the center pixel of the determination plane 15 (optional). Hence, the image 28 is incident on the determination region 23 in the actual position 18 which can also be referred to as initial position. The determination unit 14 is adapted to generate a signal indicating that the determination region 23 is illuminated, e.g. that the image 28 is incident on the determination region 23.

The image 28 is moved in a first direction 29 which can also be referred to as x-direction for a defined distance 30 which can also be referred to as "x". The image 28 is moved via the beam guiding unit 13 dependent on a change criterion, in particular until the image 28 passes from the determination region 23 to the adjacent determination region 24, wherein the change of the illuminated determination region 23, 24 can be determined via the determination unit 14, for example via the change of the illuminated pixel of the determination region 15, as the image 28 passes an edge 31 between the determination regions 23, 24. Accordingly, dependent on the distance the beam guiding unit 13 moved the image 28, the defined distance 30 can be determined. Of course, it is also possible to determine any other distance information relating to the defined distance 30, such as the time required to move the image 28 and conclude on the defined distance 30.

Subsequently, the image 28 may be moved from the initial position 18 according to this exemplary embodiment (or from the end position of the first movement, e.g. after the change criterion was met) in a second direction 32 which can also be referred to as y-direction also for a defined distance 33 which can also be referred to as "y". As the determination regions 19 - 27 can be arranged in defined spatial positions, for example comprising given coordinates in a coordinate systems, it is possible to determine the actual position 18 dependent on the defined distances 30, 33 or any other distance information, such as the moving time of the beam guiding unit 13 or the like.

It is also possible to further perform two more determination processes, in the directions 34 and 35, which can also be referred to as "-x" and "-y" for corresponding distances 36, 37. After the actual position 18 of the image 28 of the calibration source 8 - 10 has been determined, the actual position 18 can be compared with a nominal position 38 in which the image 28 would be incident on the determination plane 15, if the apparatus 1 was properly calibrated. Hence, the determination unit 14 may determine the difference between the nominal position 38 and the actual position 18 and may therefore, generate calibration information. It is also possible to calibrate the apparatus 1 dependent on the calibration information, in particular to adjust the beam guiding unit 13 in that the nominal position 38 is met, wherein the beam guiding unit 13 is adjusted to ensure that the image 28 is incident in the nominal position 38.

Of course, the determination and calibration process can be performed for multiple calibration sources 8, 9, 10, for example for a plurality of calibration sources 8, 9, 10, in particular 11 times 11 calibration sources 8, 9, 10. Self-evidently, it is also possible to generate the calibration sources 9, 10 directly on a build plate 39 or any other arbitrary structure of the apparatus 1 instead of inserting a calibration base body into the process chamber 7. Thus, it is possible to perform a calibration of the apparatus 1 in advance to, during or after an additive manufacturing process without the need for inserting a test specimen into the process chamber 7. Of course, the inventive method may be performed on the apparatus 1.

## Claims

1. Method for calibrating an apparatus (1) for additively manufacturing three-dimensional objects by means of successive layerwise selective irradiation and consolidation of layers of a build material which can be consolidated by means of an energy beam (3), **characterized by**
- providing at least one calibration source (8, 9, 10) in a calibration plane (16)
- imaging the calibration source (8, 9, 10) to an actual position (18) in a determination plane (15) comprising at least two determination regions (19 - 27), preferably with given coordinates, in particular arranged in a grid-like pattern
- moving the image (28) of the calibration source (8, 9, 10) from the actual position (18) in at least one direction (29, 32, 34, 35) across the determination plane (15) until the image (28) passes from the actual determination region (19 - 27) into another determination region (19 - 27)
- determining a distance information indicating a defined distance (30, 33, 36, 37) the image (28) is moved
- determining the actual position (18) of the image (28) based on the determined distance information.

2. Method according to claim 1, **characterized in that** the image (28) is incident on a first determination region (19 - 27), in particular matching a first pixel of the determination plane (15), wherein the image (28) is moved for the defined distance (30, 33, 36, 37) in a first direction (29, 32, 34, 35) until the image (28) is incident on a second determination region (19 - 27), in particular a second pixel, adjacent to the first pixel in moving direction (29, 32, 34, 35).

3. Method according to claim 2, **characterized in that** the image (28) is moved continuously or step-wise via a beam guiding unit (13) of the apparatus (1), wherein a minimum moving distance is below a size of the determination regions (19 - 27), in particular the pixel size of the pixels, in the determination plane (15).

4. Method according to claim 3, **characterized in that** the determination process is performed for at least two, preferably four, directions (29, 32, 34, 35).

5. Method according to claim 3 or 4, **characterized in that** the determination process is performed for at least two different energy beams (3).

6. Method according to one of the preceding claims, **characterized in that** a nominal position (38) of the image (28) is compared with the actual position (18), wherein if a difference between the nominal position (38) and the actual position (18) is determined, the beam guiding unit (13) is adjusted.

7. Apparatus (1) for additively manufacturing three-dimensional objects by means of successive layerwise selective irradiation and consolidation of layers of a build material which can be consolidated by means of an energy beam (3), which apparatus (1) comprises an irradiation device that is adapted to generate and guide the energy beam (3) across a build plane (5), **characterized by** at least one calibration unit (6) that is arrangeable or arranged inside a process chamber (7) of the apparatus (1), wherein the calibration unit (6) comprises at least one calibration source (8, 9, 10), wherein the apparatus (1) comprises a beam guiding unit (13) that is adapted to image the calibration source (8, 9, 10) to an actual position (18) on a determination plane (15) of a determination unit (14), wherein the determination plane (15) comprises at least two determination regions (19 - 27), wherein the beam guiding unit (13) is adapted to move the image (28) of the calibration source (8, 9, 10) in at least one direction (29, 32, 34, 35) across the determination plane (15) for a defined distance (30, 33, 36, 37), wherein a distance information indicating the defined distance (30, 33, 36, 37) is determined, wherein the defined distance (30, 33, 36, 37) depends on a changeover criterion, wherein the determination unit (14) is adapted to determine an actual position (18) of the image (28) of the calibration source (8, 9, 10) before the movement based on the distance information.

8. Apparatus according to claim 7, **characterized in that** the changeover criterion defines a changeover in at least one illuminated determination region (19 - 27), in particular the image (28) passing from the actual determination region (19 - 27) into another determination region (19 - 27).

9. Apparatus according to claim 7 or 8, **characterized in that** the beam guiding unit (13) comprises at least one beam guiding element, in particular a scanning mirror, wherein the beam guiding element is adapted to position the image (28) of the calibration source (8, 9, 10) on the determination plane (15) with a defined positioning accuracy.

10. Apparatus according to claim 9, **characterized in that** the defined positioning accuracy is less or equal the size of the determination region (19 - 27), in particular the pixel size.

11. Apparatus according to one of the claims 7 to 10, **characterized in that** the calibration unit (6) comprises a plurality of calibration sources (8, 9, 10) that are arranged in a defined pattern, in particular a grid-like pattern, preferably 11 times 11 calibration sources (8, 9, 10).

12. Apparatus according to one of the claims 7 to 11, **characterized in that** the calibration unit (6) comprises a calibration base body with at least one recess in which the at least one calibration source (8, 9, 10) is received.

13. Apparatus according to one of the claims 7 to 12, **characterized in that** the at least one calibration source (8, 9, 10) is built as light source, in particular as light emitting diode, or as fiber coupled with a light source or as surface element adapted to emit radiation upon irradiation with an energy beam (3).

14. Apparatus according to one of the claims 7 to 13, **characterized by** at least one receiving means arranged in the process chamber (7) of the apparatus (1), which is adapted to receive the calibration unit (6).

15. Apparatus according to one of the claims 7 to 14, **characterized in that** the calibration unit (6) is adapted to compare a nominal position (38) of the image (28) with an actual position (18), wherein the beam guiding unit (13) is adjusted dependent on a difference between the nominal position (38) and the actual position (18).
